# EUROPÄISCHE PATENTANMELDUNG

(11) **EP 4 290 740 A1**
(43) Veröffentlichungstag der Anmeldung: **13.12.2023**
(21) Anmeldenummer: 23178029.7
(22) Anmeldetag: 07.06.2023
(51) Int. Cl.: H02K 1/2793

(54) **ELEKTRISCHE MASCHINE MIT AXIALEM LUFTSPALT FÜR EIN LUFTFAHRZEUG**

(30) Priorität: 10.06.2022 DE 102022205899
(71) Anmelder: Rolls-Royce Deutschland Ltd & Co KG, 15827 Blankenfelde-Mahlow (DE)
(72) Erfinder: RUDENKO, Anton, 15827 Blankenfelde-Mahlow (DE)

(57) **Zusammenfassung**

Eine elektrische Maschine (1) mit axialem Luftspalt (S), insbesondere für ein Luftfahrzeug (2), umfasst: einen Stator (10), einen relativ zum Stator (10) drehbaren Rotor (11), zumindest einen Permanentmagnet (12A-12D), der am Rotor (11) durch einen Halteabschnitt (110) des Rotors (11) an einer Basis (111) des Rotors (11) formschlüssig gehalten ist, und eine Schutzschicht (13A-13D), welche eine dem Stator (10) zugewandte Seite (120) des zumindest einen Permanentmagneten (12A-12D) überdeckt, wobei der Halteabschnitt (110) des Rotors (11) die Schutzschicht (13A-13D) übergreift.

## Beschreibung

Die vorliegende Offenbarung bezieht sich insbesondere auf eine elektrische Maschine mit einem axialen Luftspalt für ein Luftfahrzeug und auf ein Luftfahrzeug mit einer solchen elektrischen Maschine.

Luftfahrzeuge werden in vielfältigen Ausgestaltungen angetrieben. Verbrennungsmaschinen, z.B. Kolbenmotoren oder Gasturbinentriebwerke, ermöglichen große Reichweiten und hohe Geschwindigkeiten. Antriebe mit einem oder mehreren Elektromotor(en) ermöglichen einen Einsatz von nachhaltig erzeugter Energie und sind mitunter besonders wartungsarm und leise.

Im Luftfahrtbereich ist es stets wünschenswert, eine möglichst große Sicherheit zu gewährleisten. Ein Ausfall eines Bauteils soll möglichst unwahrscheinlich sein. Falls es doch zu einem Ausfall kommt, sollen die Konsequenzen des Ausfalls möglichst gering gehalten werden. Zugleich wird typischerweise ein geringes Gesamtgewicht angestrebt.

In der US 7,990,011 B2 ist ein Rotor für einen Elektromotor beschrieben, bei dem Magnete, ein äußerer Ring, eine Rotorscheibe und eine Abdeckung der Magnete allesamt miteinander verklebt sind, um die Magnete zu fixieren und um Vibrationen zu dämpfen. Es wäre jedoch wünschenswert, eine noch sicherere Lösung bereitzustellen.

Eine Lösung mit vielen sehr kleinen Magneten, die jeweils in einem zugehörigen Gehäuse untergebracht sind, ist in der US 11,239,716 B2 beschrieben. Durch die daraus folgende Verringerung der durch magnetisches Material belegten Fläche kann es jedoch zu einer Verringerung der Effizienz kommen.

Aufgabe der vorliegenden Erfindung ist es, eine möglichst sichere und zugleich effiziente elektrische Maschine mit axialem Luftspalt bereitzustellen.

Gemäß einem Aspekt wird eine elektrische Maschine mit axialem Luftspalt, insbesondere für ein Luftfahrzeug oder ein anderes Fahrzeug, bereitgestellt. Die elektrische Maschine umfasst einen Stator, einen relativ zum Stator drehbaren Rotor, zumindest einen Permanentmagnet und eine Schutzschicht. Der zumindest eine Permanentmagnet ist am Rotor durch einen Halteabschnitt des Rotors an einer Basis des Rotors formschlüssig gehalten. Die Schutzschicht überdeckt eine dem Stator zugewandte Seite des zumindest einen Permanentmagneten. Dabei ist vorgesehen, dass der Halteabschnitt des Rotors die Schutzschicht übergreift. Zwischen dem Rotor und dem Stator ist der axiale Luftspalt ausgebildet.

Hierdurch wird es ermöglicht, dass bei einer Zerstörung, z.B. bei einem Bruch des Permanentmagneten die so entstehenden Bruchstücke des Permanentmagneten sicher an der Basis des Rotors gehalten werden, ohne dass diese vom Rotor gelöst werden und Folgeschäden verursachen können. Zudem können auf diese Weise eine verteilte Krafteinleitung zwischen Rotorstruktur und Permanentmagnet realisiert und dadurch Spannungsspitzen im spröden Magnetmaterial reduziert werden, sodass in vielen Fällen schon ein Bruch des zumindest einen Permanentmagneten verhindert werden kann. Indem der Halteabschnitt des Rotors die Schutzschicht übergreift, ist eine besonders sichere Befestigung der Schutzschicht möglich, was wiederum eine Reduzierung einer Spaltbreite zwischen dem Rotor und dem Stator ermöglicht. Somit kann nicht nur die Sicherheit der elektrischen Maschine erhöht werden, sondern es ist zudem trotz eines einfachen Aufbaus auch eine Verbesserung der Effizienz der elektrischen Maschine möglich. Bei der elektrischen Maschine handelt es sich z.B. um eine Axialflussmaschine, eine Transversalflussmaschine und/oder um eine Mischform z.B. mit radialem und axialem Luftspalt.

Der Rotor kann eine Vielzahl von Permanentmagneten umfassen. Dabei kann eine einzelne Schutzschicht mehrere oder sämtliche der Permanentmagneten überdecken. Ferner kann z.B. für jeden Permanentmagnet eine separate Schutzschicht vorgesehen sein.

Die Schutzschicht umfasst z.B. ein faserverstärktes Kunststoffmaterial. Das ermöglicht eine besonders flache Ausbildung der Schutzschicht, wodurch der Abstand des oder der Permanentmagnete zu den Spulen besonders gering gehalten werden kann. Ferner ermöglicht der Einsatz eines solchen Materials eine besonders gute Rückhaltung z.B. von in meinem Fehlerfall entstehenden Bruchstücken.

Fasern der Schutzschicht können Karbonfasern, Keramikfasern und/oder Glasfasern umfassen. Das erlaubt eine besonders gute Sicherung des zumindest einen Permanentmagneten.

Optional umfasst die Schutzschicht eine (erste) Lage mit Fasern. Die Fasern der (ersten) Lage können (zumindest zum Großteil oder allesamt) senkrecht zu einer Kante des Halteabschnitts verlaufen. Hierdurch können die Fasern jeweils am Halteabschnitt fixiert sein und den Permanentmagneten besonders sicher halten.

In einer Weiterbildung umfasst die Schutzschicht eine weitere (zweite) Lage mit Fasern. Die weitere (zweite) Lage unterscheidet sich beispielsweise von der (ersten) Lage. Zum Beispiel weisen die Fasern der Lage eine größere Steifigkeit auf als die Fasern der weiteren Lage. Die beiden Lagen sind z.B. übereinander angeordnet. Die weitere (zweite) Lage kann zwischen der (ersten) Lage und dem Permanentmagneten angeordnet sein. Die weitere (zweite) Lage kann dabei vorrangig benachbarte Bereiche des Permanentmagneten aneinander sichern, während die (erste) Lage den Permanentmagneten als Ganzes an der Basis sichert.

Insbesondere durch den Übergriff des Halteabschnitts kann die Schutzschicht besonders dünn ausgeführt werden. Die Schutzschicht weist beispielsweise eine Stärke von zwischen 0,01 mm oder 0,015 mm und 0,3 mm auf, insbesondere von 0,02 mm bis 0,14 mm. Insbesondere kann eine besonders geringe Stärke von 0,01 bis 0,05 vorgesehen sein, insbesondere von 0,015 mm bis 0,02 mm oder allgemein eine Stärke von 0,02 mm oder weniger. So kann ein besonders geringer Abstand zwischen Rotor und Stator erzielt werden.

Die Schutzschicht kann mit dem zumindest einen Permanentmagneten flächig verklebt sein, insbesondere vollflächig. So ist eine besonders gute Sicherung von lokal gebildeten Bruchstücken möglich.

Es kann vorgesehen ein, dass die Schutzschicht entlang einer Fläche an dem zumindest einen Permanentmagneten anliegt. Ferner kann vorgesehen sein, dass die Schutzschicht in einer Richtung senkrecht zu dieser Fläche elektrisch isolierend ausgebildet ist. Hierdurch sind besonders gute elektromagnetische Eigenschaften der elektrischen Maschine erzielbar.

Optional umfasst der zumindest eine Permanentmagnet eine Neodym-Eisen-Bor-Legierung (NdFeB-Legierung) und/oder eine Samarium-Cobalt-Legierung (SmCo-Legierung) oder besteht aus der NdFeB-Legierung und/oder der SmCo-Legierung. Diese Legierungen weisen besonders gute magnetische Eigenschaften auf. Allerdings neigen NdFeB-Legierungen typischerweise zur scharfkantigen Splitterung. SmCo-Legierungen sind oftmals sehr spröde. Daher können sie in einigen Anwendungsgebieten nicht oder bislang nur mit Sicherungsmaßnahmen eingesetzt werden, welche die Vorteile der magnetischen Eigenschaften wieder zumindest teilweise zunichtemachen. Durch die hierin beschriebene Ausgestaltung der elektrischen Maschine können die magnetischen Eigenschaften derartige Magnete hingegen trotz sicherer Halterung besonders gut ausgenutzt werden.

Die Basis und der Halteabschnitt können den zumindest einen Permanentmagneten an mindestens drei Seiten umgeben, beispielsweise an einer Unterseite, einer zur Unterseite gegenüberliegenden Oberseite und einer die Oberseite mit der Unterseite verbindenden Stirnseite. Das ermöglicht eine besonders sichere formschlüssige Halterung. Optional sind die Basis und der Halteabschnitt einstückig miteinander ausgebildet.

Die Basis und ein Vorsprung des Halteabschnitts können den zumindest einen Permanentmagneten konkret an zwei gegenüberliegenden Seiten des Permanentmagneten einfassen, z.B. an der Oberseite und der Unterseite, um den Permanentmagneten sicher zu halten.

Optional umfasst der Permanentmagnet mehrere Teilstücke. Eine weitere Schutzschicht kann vorgesehen sein und zwischen den beiden Teilstücken angeordnet sein. Die Schutzschicht und die weitere Schutzschicht verlaufen optional parallel zueinander. Hierdurch wird eine besonders gute Sicherung von Bruchstücken möglich, ähnlich wie bei einem Verbund-Sicherheitsglas.

Optional bildet die Schutzschicht mit dem zumindest einen Permanentmagneten eine Schäftung. Das ermöglicht eine weitere Verbesserung der Rückhaltung des Permanentmagneten durch die Schutzschicht. Die Schäftung kann durch eine Fase am Permanentmagneten gebildet sein, an welcher die Schutzschicht anliegt. Die Schäftung kann im Bereich des Halteabschnitts ausgebildet sein, wo der Permanentmagnet ohnehin keine wesentliche magnetische Funktion bereitstellt.

Der zumindest eine Permanentmagnet kann an gegenüberliegenden Seiten von der Schutzschicht und einer weiteren Schutzschicht eingefasst sein. Optional sind die Schutzschicht und die weitere Schutzschicht mittels durch den zumindest einen Permanentmagneten erstreckte Verbindungen materialeinheitlich miteinander verbunden. Das erlaubt eine besonders sichere Halterung.

Gemäß einem Aspekt wird ein Luftfahrzeug bereitgestellt, umfassend eine Rotoreinheit mit Rotorschaufeln und die elektrische Maschine nach einer beliebigen, hierin beschriebenen Ausgestaltung zum Antrieb der Rotoreinheit. Die Rotoreinheit und die elektrische Maschine bilden ein Antriebssystem für das Luftfahrzeug. Das Antriebssystem dient zur Erzeugung von Schub und/oder Auftrieb für das Luftfahrzeug.

Es werden nun beispielhaft Ausführungsformen mit Bezug auf die Figuren beschrieben; in den Figuren zeigen in schematischen Darstellungen:
- Figur 1: ein Luftfahrzeug in Form eines Flugzeugs mit einer elektrisch angetriebenen Rotoreinheit;
- Figur 2: eine elektrische Maschine des Luftfahrzeugs gemäß Figur 1;
- Figur 3: einen Abschnitt eines Rotors der elektrischen Maschine gemäß Figur 2 mit einem Permanentmagnet und einer Schutzschicht;
- Figur 4: den Abschnitt des Rotors der elektrischen Maschine gemäß Figur 3, wobei ein Fehlerfall mit einem zerbrochenen Permanentmagnet gezeigt ist;
- Figur 5: eine alternative Ausgestaltung des Rotors für die elektrische Maschine gemäß Figur 2 mit mehreren Schutzschichten;
- Figur 6: eine weitere alternative Ausgestaltung des Rotors für die elektrische Maschine gemäß Figur 2, wobei eine Schutzschicht mit einem Permanentmagneten eine Schäftung bildet;
- Figur 7: eine weitere alternative Ausgestaltung des Rotors für die elektrische Maschine gemäß Figur 2, wobei ein Permanentmagnet zwischen Schutzschichten eingefasst ist; und
- Figur 8: eine Detailansicht eines Randbereichs des Permanentmagneten am Rotor gemäß Figur 3.

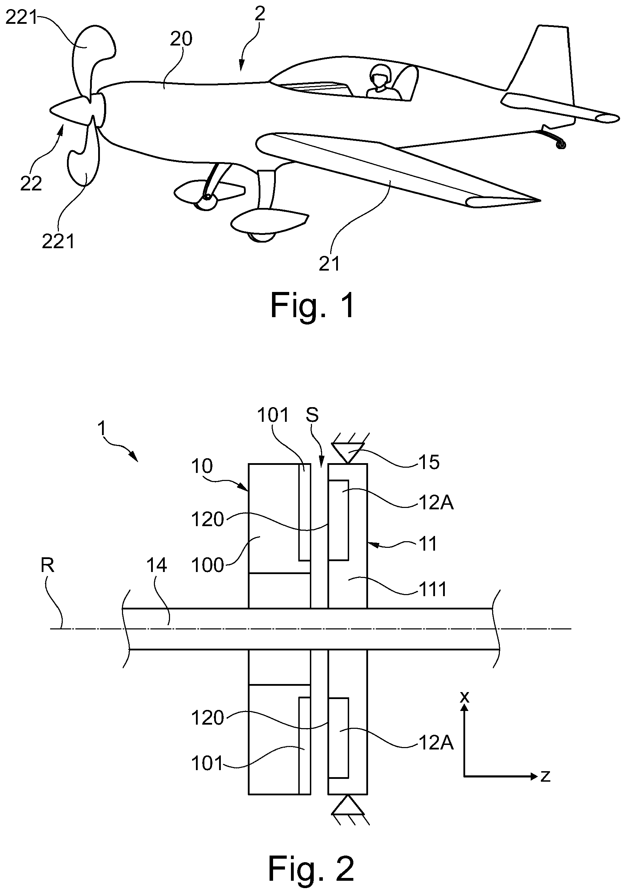

Figur 1 zeigt ein Luftfahrzeug 2 in Form eines elektrisch angetriebenen Flugzeugs mit einem Rumpf 20 und Flügeln 21.

Das Luftfahrzeug 2 umfasst ein Antriebssystem mit einer Rotoreinheit 22, die durch eine elektrische Maschine des Antriebssystems angetrieben wird. Die Rotoreinheit 22 umfasst mehrere, hier exemplarisch zwei Rotorschaufeln 221. Die Rotorschaufeln 221 sind im gezeigten Beispiel an einer Nabe montiert und bilden damit einen Propeller. In alternativen Ausgestaltungen umfasst das Luftfahrzeug 2 z.B. einen Fan anstelle eines Propellers und/oder mehrere Antriebssysteme mit jeweils zumindest einem Propeller, Fan oder dergleichen.

Figur 2 zeigt die elektrische Maschine 1 des Luftfahrzeugs 2 in einer schematischen Schnittansicht. Die elektrische Maschine 1 ist in Form eines Elektromotors ausgebildet (der optional auch als Generator verwendbar ist). Die elektrische Maschine 1 weist einen axialen Luftspalt (S) auf. Konkret ist die elektrische Maschine 1 als Axialflussmaschine ausgebildet und umfasst einen Stator 10, einen Rotor 11, eine Welle 14 und ein Lager 15. Die elektrische Maschine 1 stellt einen Axialflussmotor dar und kann auch als Scheibenläufermotor bezeichnet werden, wobei dies nur beispielhaft ist und die elektrische Maschine 1 auch z.B. als Transversalflussmaschine ausgebildet sein kann.

Der Rotor 11 ist mittels des Lagers 15 um eine Rotationsachse R relativ zum Stator 10 drehbar gelagert. Das Lager 15 ist hier in Form eines Kugellagers lediglich beispielhaft veranschaulicht.

Der Stator 10 ist fest an einem Träger des Luftfahrzeugs 2 montiert. Beispielsweise ist der Stator 10 relativ zum Rumpf 20 fixiert. Der Stator 10 umfasst einen Körper 100, an welchem mehrere elektrische Spulen 101 festgelegt sind. Die Spulen 101 des Stators 10 sind z.B. um am Körper 100 ausgebildete oder befestigte Statorzähne gewickelt.

Der Rotor 11 umfasst eine Basis 111, an der mehrere (oberflächenmontierte) Permanentmagnete 12A festgelegt sind. Die Permanentmagnete 12A sind mit paarweise wechselnder Polarität an der Basis 111 des Rotors 11 befestigt. Permanenterregte elektrische Maschinen erlauben besonders hohe Leistungsdichten und Drehmomentdichten. Die Basis 111 ist an der Welle 14 fixiert. Die Permanentmagnete 12A sind den Spulen 101 des Stators 10 zugewandt. Jeder Permanentmagnet 12A weist eine Seite 120 auf, welche den Spulen 101 des Stators 10 zugewandt ist.

Ein elektrischer Strom durch die Spulen 101 erzeugt ein Magnetfeld, welches den Rotor 11 in eine Drehung um die Rotationsachse R versetzt. Zwischen dem Stator 10 und dem Rotor 11 ist dabei der axiale Luftspalt S ausgebildet, über welchen die magnetischen Kräfte zwischen dem Stator 10 und dem Rotor 11 wirken. Dabei überbrücken magnetische Felder den axialen Luftspalt S in axialer Richtung (in einer Richtung parallel zur Rotationsachse R). Der axiale Luftspalt S ist im Allgemeinen mit einem Gas oder Gasgemisch, hier mit Luft, gefüllt. Der axiale Luftspalt S weist die Form einer Kreisscheibe auf. Somit sind der Rotor 11 und der Stator 10 durch den (eben geformten) axialen Luftspalt S voneinander separiert. Der Stator 10 und der Rotor 11 sind in axialer Richtung, parallel zur Rotationsachse R, voneinander beabstandet. Der Rotor 11 ist axial neben dem Stator 10 angeordnet.

Ferner ist in Figur 2 eine zur Rotationsachse R parallele Achse mit z gekennzeichnet. Eine dazu senkrechte Achse ist mit x gekennzeichnet. Eine zur Achse x und zur Achse z senkrechte Achse entspricht in Figur 2 einer Achse senkrecht in die Blattebene.

Die elektrische Maschine 1 treibt die Rotoreinheit 22 über die Welle 14 an. Beispielseise ist die Rotoreinheit 22 an der Welle befestigt oder anderweitig damit wirkverbunden. Optional umfasst das Antriebssystem mehrere elektrische Maschinen 1 an der Welle 14.

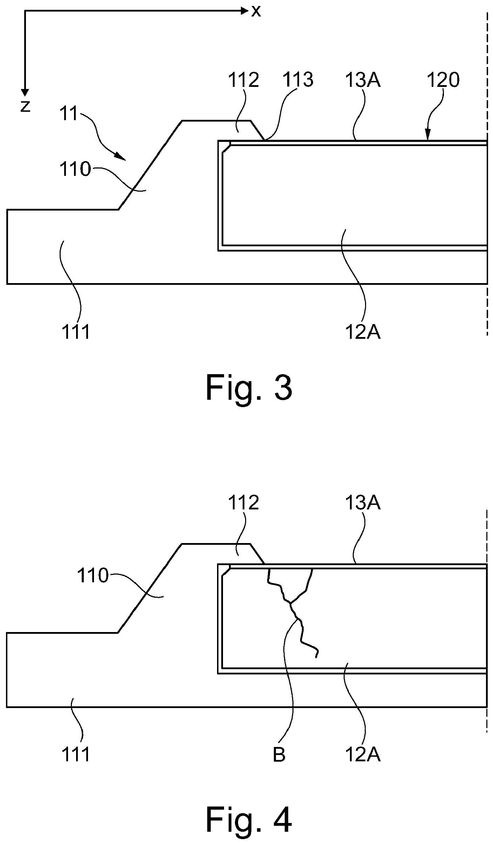

Figur 3 zeigt einen Ausschnitt des Rotors 11 an einem Randbereich von einem der Permanentmagnete 12A. Der Permanentmagnet 12A erstreckt sich hauptsächlich in der Achse x und weist in Richtung der Achse z eine Stärke auf.

Der Rotor 11 umfasst eine Basis 111, an welcher ein Halteabschnitt 110 ausgebildet ist. Der Permanentmagnet 12A ist am Rotor 11 durch den Halteabschnitt 110 des Rotors 11 an der Basis 111 des Rotors 11 formschlüssig gehalten. Dabei umgreift der Halteabschnitt 110 den Permanentmagneten 12A. Ein Randbereich des Permanentmagneten 12A ist zwischen dem Halteabschnitt 110 und der Basis 111 angeordnet und dadurch formschlüssig gegen ein Abheben entlang der Achse z gehalten, optional kraftschlüssig dazwischen eingespannt.

Hierzu umfasst der Halteabschnitt einen Vorsprung 112, welcher sich (im Randbereich des Permanentmagneten 12A) entlang einer dem Stator 10 zugewandten Seite 120 des Permanentmagneten 12A erstreckt (entlang der Achse x). Die Basis 111 und der Vorsprung 112 des Halteabschnitts 110 fassen den Permanentmagneten 12A dabei an zwei einander gegenüberliegenden Seiten des Permanentmagneten 12A ein, und zwar der dem Stator 10 zugewandten Seite (der Oberseite) und der vom Stator 10 abgewandten Unterseite. Die Unterseite des Permanentmagneten 12A liegt flächig an der Basis 111 an. Der Halteabschnitt 110 erstreckt sich an einer Stirnseite des Permanentmagneten 12A, welche die Oberseite mit der Unterseite des Permanentmagneten 12A verbindet. Somit umgeben die Basis 111 und der Halteabschnitt 110 (samt Vorsprung 112) den zumindest einen Permanentmagneten 12A an drei Seiten. Figur 3 zeigt ein Ende des Permanentmagneten 12A. Das gegenüberliegende andere Ende kann auf analoge Weise an der Basis 111 gehalten sein. In diesem Fall wird der Permanentmagnet 12A beim Zusammenbau z.B. seitlich eingeschoben. Alternativ ist am anderen Ende eine Befestigungsvorrichtung vorgesehen.

Wie in Figur 3 gezeigt, umfasst die elektrische Maschine 1 ferner (zumindest) eine Schutzschicht 13A, welche die dem Stator 10 zugewandte Seite 120 des Permanentmagneten 12A überdeckt. Vorliegend überdeckt die Schutzschicht 13A die dem Stator 10 zugewandte Seite 120 des Permanentmagneten 12A vollständig. Ferner kann die Schutzschicht 13A auch benachbarte Permanentmagneten 12A überdecken, insbesondere sämtliche dem Stator 10 zugewandte Permanentmagneten 12A des Rotors 11. In letzterem Fall ist die Schutzschicht 12A beispielsweise ringförmig.

Dabei ist vorgesehen, dass der Halteabschnitt 110 des Rotors 11 auch die Schutzschicht 13A übergreift. Hierdurch wird die Schutzschicht 13A besonders sicher am Rotor 11 gehalten und sichert den Permanentmagneten 12A besonders gut daran.

Vorliegend ist die Schutzschicht 13A flächig mit dem Permanentmagneten 12A verklebt, und zwar insbesondere über die gesamte Kontaktfläche der Schutzschicht 13A mit dem Permanentmagneten 12A.

Der Permanentmagnet 12A besteht aus einer Neodym-Eisen-Bor-Legierung. Alternativ ist z.B. eine Samarium-Cobalt-Legierung denkbar. Derartige Legierungen sind schwer zu verarbeiten. Die vorliegende Sicherung erlaubt größere Herstellungstoleranzen.

Figur 4 veranschaulicht einen Fehlerfall, bei welchem der Permanentmagnet 12A einen Bruch B aufweist. Durch den Bruch B hat sich ein loses Bruchstück gebildet. Durch die Schutzschicht 13A wird dieses am übrigen Permanentmagneten 12A gehalten. Ferner erstreckt sich der Bruch B nicht ganz durch den Permanentmagneten 12A hindurch, da dieser durch die Schutzschicht 13A gestützt wird.

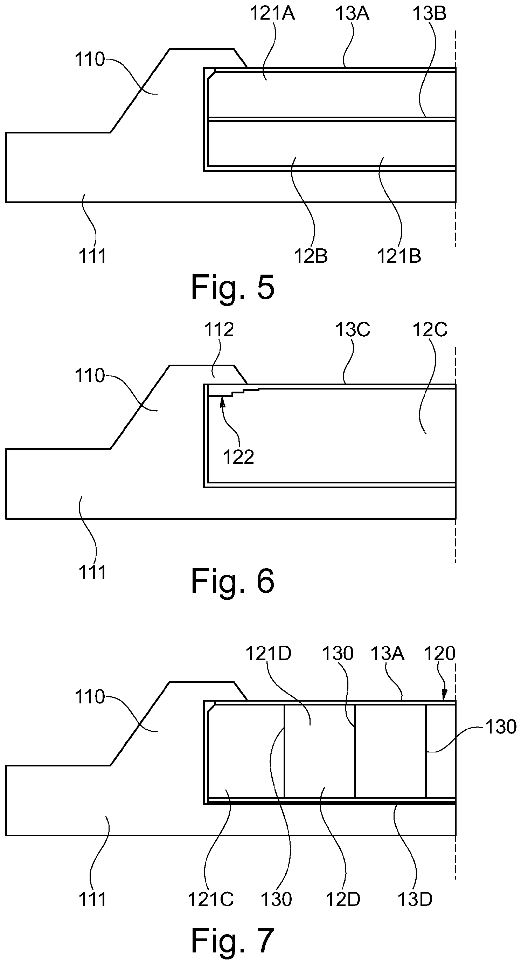

Figur 5 zeigt eine Weiterbildung, bei welcher zusätzlich zur vorstehend beschrieben angeordneten Schutzschicht 13A eine weitere Schutzschicht 13B am Permanentmagneten 12A vorgesehen ist. Hierbei ist der Permanentmagnet 12A vorliegend zweiteilig ausgebildet, umfasst also zwei Teilstücke 121A, 121B. Ein erstes Teilstück 121A ist dabei dem Stator 10 zugewandt, ein zweites Teilstück 121B ist dem Stator 10 abgewandt. Zwischen den beiden Teilstücken 121A, 121B erstreckt sich die weitere Schutzschicht 13B. Die weitere Schutzschicht 13B ist mit beiden Teilstücken 121A, 121B des Permanentmagneten 12A vollflächig verklebt. Die Funktionsweise ist daher ähnlich wie bei einem Verbund-Sicherheitsglas. Der Permanentmagnet 12A als Magnetpaket mit den beiden Teilstücken 121A, 121B ist im Falle eines Bruchs besonders gut gesichert.

Die Schutzschicht 13A und die weitere Schutzschicht 13B verlaufen parallel zueinander.

Figur 6 zeigt eine Ausgestaltung, bei welcher der Permanentmagnet 12A im Randbereich unter dem Vorsprung 112 eine Fase 122 aufweist. Diese kann schräg oder schrittweise ausgebildet sein. Die Schutzschicht 13C füllt den durch die Fase 122 freigelassenen Raum auf. Dadurch weist die Schutzschicht 13C unter dem Vorsprung 112 eine Verdickung auf. Die Materialstärke der Schutzschicht 13C ist im Bereich der Fase 122 größer als an einem vom Vorsprung 112 (und der Fase 122) beabstandeten Bereich der Schutzschicht 13C.

Hierdurch bildet die Schutzschicht 13C mit dem Permanentmagneten 12C eine Schäftung. Das erlaubt eine besonders sichere Halterung der Schutzschicht 13C im Randbereich der Schutzschicht 13C und des Permanentmagneten 12C. Die Schutzschicht 13C kann somit besonders straff am Permanentmagneten 12C gehalten sein und diesen daher besonders gut sichern.

Figur 7 zeigt eine Ausgestaltung, bei welcher eine weitere Schutzschicht 13D an der Seite (hier der Unterseite) des Permanentmagneten 12D, die der dem Stator 10 zugewandten Seite 120 des Permanentmagneten 12D abgewandt ist, vorgesehen ist. Somit ist der Permanentmagnet 12D an gegenüberliegenden Seiten von der Schutzschicht 13A und der weiteren Schutzschicht 13D eingefasst.

Ferner sind die Schutzschicht 13A und die weitere Schutzschicht 13D (optional) mittels durch den zumindest einen Permanentmagneten 12D hindurch erstreckte Verbindungen 130 materialeinheitlich miteinander verbunden. Die Verbindungen 130 erstrecken sich flächig zwischen jeweils zwei Teilstücken 121C, 121D des Permanentmagneten 12D in Form eines Magnetpakets. Alternativ oder zusätzlich können Verbindungen 130 durch Bohrungen im Permanentmagneten 12D gehen.

Diese Sandwich-Struktur erlaubt eine besonders gute Sicherung des Permanentmagneten 12D.

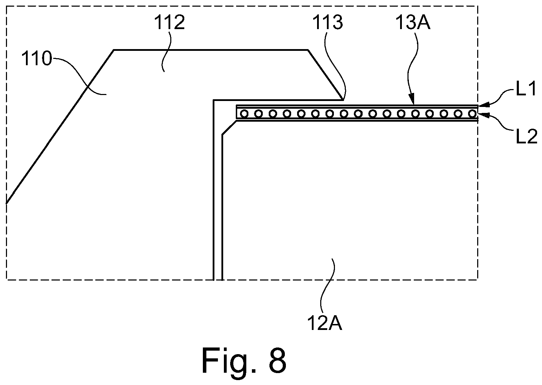

Figur 8 zeigt den Randbereich des Permanentmagneten 12A aus Figur 3 im Detail, wobei Einzelheiten der Schutzschicht 13A veranschaulicht sind. Es sei angemerkt, dass auch die übrigen hierin beschriebenen Schutzschichten 13B-13D gleichermaßen aufgebaut sein können.

Vorliegend umfasst die Schutzschicht 13A ein faserverstärktes Kunststoffmaterial. Bei dem Kunststoffmaterial handelt es sich z.B. um einen Thermoplast oder um einen Duroplast. Bei den Fasern handelt es sich z.B. um Karbonfasern und/oder Keramikfasern (alternativ oder zusätzlich um Glasfasern).

Dabei ist veranschaulicht, dass die Schutzschicht 13A eine mehrlagige Struktur aufweisen kann. Vorliegend umfasst die Schutzschicht eine obere Lage L1 mit Fasern, die senkrecht zu einer Kante 113 des Halteabschnitts 110 (konkret des Vorsprungs 112 des Halteabschnitts 110) verlaufen. Diese Fasern gehen also senkrecht von der Kante 113 ab. Alternativ ist eine angewinkelte Ausrichtung denkbar, es kann aber insbesondere vorgesehen sein, dass die Fasern oder oberen Schicht in einem Winkel zur Kante 113 verlaufen, nicht parallel dazu.

Vorliegend umfasst die Schutzschicht 13A eine weitere, untere Lage L2 mit Fasern. Die Fasern der oberen Lage L1 weisen eine größere Steifigkeit auf als die Fasern der unteren Lage L2. Hierdurch können Drücke besonders gut verteilt werden. Die Fasern der unteren Lage L2 sind anders ausgerichtet als die Fasern der oberen Lage L1, beispielsweise in einem Winkel dazu (z.B. im rechten Winkel). Sämtliche Fasern der Lagen L1, L2 der Schutzschicht 13A verlaufen vorliegend parallel zur Oberseite des Permanentmagneten 12A, also vorliegend in der Ebene senkrecht zur Achse z.

Die Schutzschicht 13A liegt entlang einer Fläche am Permanentmagneten 12A an und ist in einer Richtung senkrecht zu dieser Fläche elektrisch isolierend ausgebildet. Das ist z.B. durch die genannte Ausrichtung der Fasern (und/oder durch elektrisch isolierende Fasern) in Verbindung mit einer elektrisch isolierenden Kunststoffmatrix möglich.

Die Schutzschicht 13A ist z.B. in Form einer Folie ausgebildet. Die Schutzschicht 13A weist (insbesondere überall, ggf. abgesehen von einem Randbereich) eine Dicke auf, die geringer ist als 0,3 mm, insbesondere geringer als 0,14 mm, insbesondere geringer als 0,02 mm. Vorliegend weist die Schutzschicht 13A (insbesondere überall, ggf. abgesehen von einem Randbereich), eine Dicke von 0,015 mm auf. Indem die Schutzschicht 13A durch den Haltebereich 110 (samt Vorsprung 112) am Permanentmagneten 12A festgeklemmt wird, wird auch bei dieser besonders geringen Dicke der Schutzschicht 13A eine sichere und robuste Halterung möglich.

Der Rotor 11 der beschriebenen Ausführungen ist besonders robust und gegen Defekte geschützt und erlaubt damit eine große Lebensdauer und zugleich eine besonders große Effizienz.

### Bezugszeichenliste

- 1: elektrische Maschine
- 10: Stator
- 100: Körper
- 101: Spule
- 11: Rotor
- 110: Halteabschnitt
- 111: Basis
- 112: Vorsprung
- 12A-12D: Permanentmagnet
- 120: Seite
- 121A-121D: Teilstück
- 122: Fase
- 13A-13D: Schutzschicht
- 130: Verbindung
- 14: Welle
- 15: Lager
- 2: Luftfahrzeug
- 20: Rumpf
- 21: Flügel
- 22: Rotoreinheit
- 221: Rotorschaufel
- B: Bruch
- L1, L2: Lage
- R: Rotationsachse
- S: axialer Luftspalt

## Patentansprüche

1. Elektrische Maschine (1) mit axialem Luftspalt (S), insbesondere für ein Luftfahrzeug (2), umfassend:
- einen Stator (10),
- einen relativ zum Stator (10) drehbaren Rotor (11),
- zumindest einen Permanentmagnet (12A-12D), der am Rotor (11) durch einen Halteabschnitt (110) des Rotors (11) an einer Basis (111) des Rotors (11) formschlüssig gehalten ist, und
- eine Schutzschicht (13A-13D), welche eine dem Stator (10) zugewandte Seite (120) des zumindest einen Permanentmagneten (12A-12D) überdeckt, wobei der Halteabschnitt (110) des Rotors (11) die Schutzschicht (13A-13D) übergreift.

2. Elektrische Maschine (1) nach Anspruch 1, wobei die Schutzschicht (13A-13D) ein faserverstärktes Kunststoffmaterial umfasst.

3. Elektrische Maschine (1) nach Anspruch 1 oder 2, wobei Fasern der Schutzschicht (13A-13D) Karbonfasern, Keramikfasern und/oder Glasfasern umfassen.

4. Elektrische Maschine (1) nach einem der vorhergehenden Ansprüche, wobei die Schutzschicht (13A-13D) eine Lage (L1) mit Fasern, die senkrecht zu einer Kante (113) des Halteabschnitts (110) verlaufen, umfasst.

5. Elektrische Maschine (1) nach Anspruch 4, wobei die Schutzschicht (13A-13D) eine weitere Lage (L2) mit Fasern umfasst, wobei die Fasern der Lage (L1) eine größere Steifigkeit aufweisen als die Fasern der weiteren Lage (L2).

6. Elektrische Maschine (1) nach einem der vorhergehenden Ansprüche, wobei die Schutzschicht (13A-13D) eine Stärke von 0,02 mm oder weniger aufweist.

7. Elektrische Maschine (1) nach einem der vorhergehenden Ansprüche, wobei die Schutzschicht (13A-13D) mit dem zumindest einen Permanentmagneten (12A-12D) flächig verklebt ist.

8. Elektrische Maschine (1) nach einem der vorhergehenden Ansprüche, wobei die Schutzschicht (13A-13D) entlang einer Fläche an dem zumindest einen Permanentmagneten (12A-12D) anliegt und in einer Richtung senkrecht zu dieser Fläche elektrisch isolierend ausgebildet ist.

9. Elektrische Maschine (1) nach einem der vorhergehenden Ansprüche, wobei der zumindest eine Permanentmagnet (12A-12D) eine Neodym-Eisen-Bor-Legierung und/oder eine Samarium-Cobalt-Legierung umfasst oder daraus besteht.

10. Elektrische Maschine (1) nach einem der vorhergehenden Ansprüche, wobei die Basis (111) und der Halteabschnitt (110) den zumindest einen Permanentmagneten (12A-12D) an mindestens drei Seiten umgeben.

11. Elektrische Maschine (1) nach einem der vorhergehenden Ansprüche, wobei die Basis (111) und ein Vorsprung (112) des Halteabschnitts (110) den zumindest einen Permanentmagneten (12A-12D) an zwei gegenüberliegenden Seiten des Permanentmagneten (12A-12D) einfasst.

12. Elektrische Maschine (1) nach einem der vorhergehenden Ansprüche, wobei der Permanentmagnet (12B) mehrere Teilstücke (121A, 121B) umfasst, wobei eine weitere Schutzschicht (13B) zwischen den beiden Teilstücken (121A, 121B) angeordnet ist und wobei die Schutzschicht (13A) und die weitere Schutzschicht (13B) parallel zueinander verlaufen.

13. Elektrische Maschine (1) nach einem der vorhergehenden Ansprüche, wobei die Schutzschicht (13C) mit dem zumindest einen Permanentmagneten (12C) eine Schäftung bildet.

14. Elektrische Maschine (1) nach einem der vorhergehenden Ansprüche, wobei der zumindest eine Permanentmagnet (12D) an gegenüberliegenden Seiten von der Schutzschicht (13A) und einer weiteren Schutzschicht (13D) eingefasst ist, wobei die Schutzschicht (13A) und die weitere Schutzschicht (13D) mittels durch den zumindest einen Permanentmagneten (12D) erstreckte Verbindungen (130) materialeinheitlich miteinander verbunden sind.

15. Luftfahrzeug (2) mit einer Rotorschaufeln (221) umfassenden Rotoreinheit (22) und der elektrischen Maschine (1) nach einem der vorhergehenden Ansprüche zum Antrieb der Rotoreinheit (22).
